Europäisches Patentamt

European Patent Office

Office européen des brevets

(19)

(11) Publication number: **0 114 052**
**B1**

(12) **EUROPEAN PATENT SPECIFICATION**

(45) Date of publication of patent specification: 21.09.88

(51) Int. Cl.⁴: **G 21 C 1/02**

(21) Application number: **84100131.6**

(22) Date of filing: **09.01.84**

(54) Tank-type fast breeder reactor.

(30) Priority: 12.01.83 JP 2184/83

(43) Date of publication of application:
25.07.84 Bulletin 84/30

(45) Publication of the grant of the patent:
21.09.88 Bulletin 88/38

(84) Designated Contracting States:
DE FR GB

(56) References cited:
FR-A-2 276 663

JOURNAL OF BRITISH NUCLEAR ENERGY
SOCIETY, vol. 14, no. 3, July 1975, pp. 183-190,
R. CARLE; "Super phénix: first commercial
plant of the fast breeder line"

(73) Proprietor: HITACHI, LTD.
6, Kanda Surugadai 4-chome Chiyoda-ku
Tokyo 100 (JP)

(72) Inventor: Sakai, Takao
Koujin Apt. D-202 3-14, Higashitaga-cho
Hitachi-shi Ibaraki-ken (JP)
Inventor: Yamakawa, Masanori
2-10, Kanesawadanchi Kanesawa-cho
Hitachi-shi Ibaraki-ken (JP)
Inventor: Ohtsuka, Masaya
Jikyouryou 6-12-1, Ayukawa-cho
Hitachi-shi Ibaraki-ken (JP)

(74) Representative: Patentanwälte Beetz sen. -
Beetz jun. Timpe - Siegfried - Schmitt-Fumian
Steinsdorfstrasse 10
D-8000 München 22 (DE)

Courier Press, Leamington Spa, England.

## Description

This invention relates to a tank-type integrated fast breeder nuclear reactor of the kind as referred to in the precharacterizing portion of patent claim 1. Such a fast breeder reactor is known from R. Carle, J. Br. Nucl. Energy Soc., 1975, 14 July, No. 3, pp 183-190.

In a sodium-cooled tank-type integrated fast breeder nuclear reactor, a plurality of intermediate heat exchangers and primary side main circulating pumps are installed within the main container of the reactor in addition to a core and a superstructure for the core. The main reactor container also contains a heat-shielding wall which separates the high-temperature primary sodium flowing from the core and the low-temperature sodium from the intermediate heat exchangers.

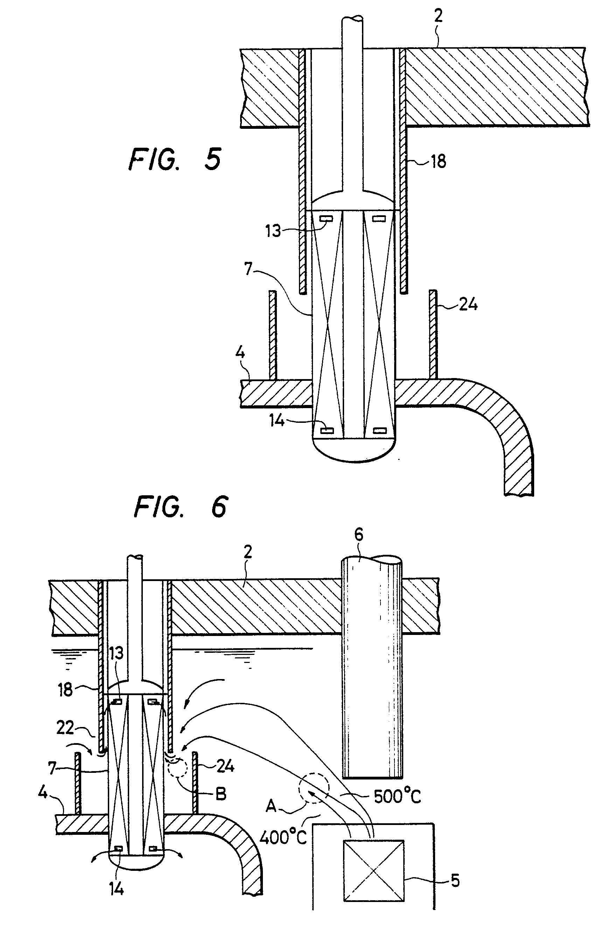

A concrete example of such an integrated fast breeder nuclear reactor is described in the above mentioned lecture-report given by R. Carle. Especially Fig. 5 of said report shows a tank-type fast breeder reactor having intermediate heat exchangers within a nuclear reactor container and utilizing sodium as a coolant for the reactor core and having a heat-shielding structural member for separating a hot plenum and a cold plenum of the nuclear reactor container and wherein a coolant-guiding cylinder surrounds each intermediate heat exchanger.

There are still some problems to be solved in the manufacture of such a reactor container. One of them is related to oscillations in the sodium temperature (referred to as "thermal striping" hereinafter) in the hot plenum which constitutes a flow path for the primary sodium flowing from the core. This thermal striping has an amplitude of several tens of degrees C, and a frequency of about 1 Hz. During normal operation, there is a difference in temperature between the sodium flowing from the core fuel assembly and the sodium flowing from the blanket fuel assembly, so that thermal striping occurs at fluid interfaces caused by this temperature difference. Also, during the transition period during the scram of the reactor, for example, the high temperature of the primary sodium from the core drops, and this causes a change in density of the primary sodium. As a result, the so-called temperature stratification phenomenon occurs in which high-temperature low-density sodium stays in the top of the hot plenum and, hence, thermal striping occurs at the interface between the high- and low-temperature sodium layers generated. If thermal striping is generated in the hot plenum, structural members within the hot plenum such as the core superstructure, the intermediate exchangers, and the primary main circulation pumps, are subjected to repeated temperature fluctuations, so that the integrity of individual structural members will be impaired by the resultant thermal fatigue. In particular, the occurrence of this temperature stratification leads to the disadvantage that since high-temperature sodium stays within the top part of the hot plenum, the volume of it can mix with the sodium flowing from the core into the hot plenum is reduced. Thus, the stratification interface accompanying the thermal striping is transmitted to the intermediate heat exchangers since the temperature variations at the core outlet are not moderated sufficiently in the hot plenum, and, consequently, this increases the thermal fatigue on the structural members of each intermediate heat exchanger.

It is the object of the present invention to provide a tank-type fast breeder which can efficiently suppress the transmission of any thermal striping generated at the interfaces between high-temperature sodium and low-temperature sodium within a hot plenum to the internal structural members of the intermediate heat exchangers, etc., during normal or transitional operations, thereby preventing thermal fatigue of the internal structural members.

Another object of the present invention is to provide a tank-type fast breeder which can prevent temperature stratification generated in the hot plenum by the buoyancy of low-density sodium during transitional operation of the plant, e.g., when the reactor is scrammed.

According to the present invention the objects are achieved with a tank-type integrated fast breeder nuclear reactor as claimed in claim 1. Dependent claims are directed on features of preferred embodiments of the fast breeder reactor according to the invention.

### Brief Description of the Drawings

Fig. 1 is a schematic top plan view of the structure of the principal parts of a tank-type integrated fast breeder nuclear reactor.

Fig. 2 is a sectional view taken along the line A — A of Fig. 1.

Fig. 3 is an explanatory view illustrating the flow of sodium in the hot plenum during normal operation of the plant.

Fig. 4 is an explanatory view illustrating the flow of sodium in the hot plenum during transitional operation of the plant.

Fig. 5 is a side view of one embodiment of the present invention.

Fig. 6 is an explanatory view illustrating the flow of sodium in the hot plenum for the embodiment of Fig. 5.

Fig. 7 is a side view of another embodiment of the present invention.

Fig. 8 is an explanatory view illustrating the flow of sodium in the hot plenum for the embodiment of Fig. 7.

Fig. 9 is a simplified calculation model of a hot plenum for showing the effects of the present invention.

Figs. 10(a) and 10(b) show the results of calculations on the flow rate profile in the hot plenum during normal operation for the prior art and the embodiment of Fig. 7, respectively.

Figs. 11(a) and 11(b) show the results of calculations on the flow rate profile and temperature profile in the hot plenum during transitional operation of the plant for the prior art, respectively, while Figs. 11(c) and 11(d) show the results of calculations on the flow rate profile and temperature profile in the hot plenum for the embodiment of Fig. 7.

Fig. 12 is a side view of a further embodiment of the present invention.

In the following embodiments of the present invention will be described in detail with reference to the accompanying drawings.

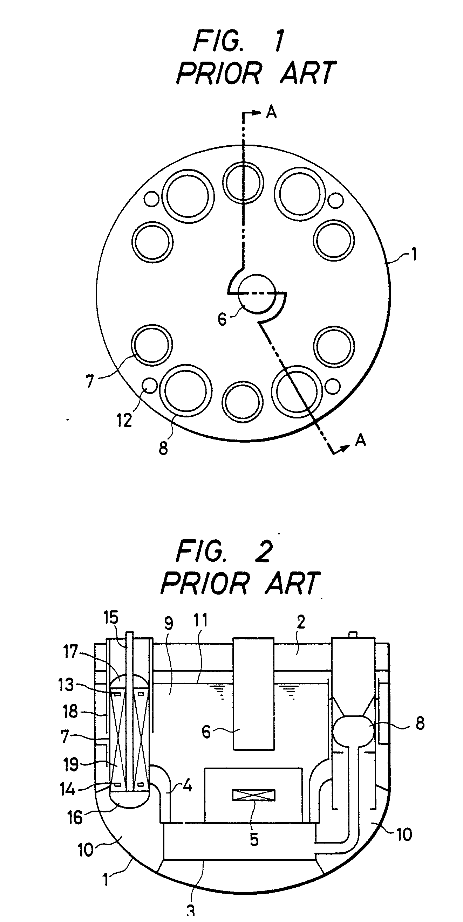

Figs. 1 and 2 show a principal part of a well-known tank-type integrated fast breeder nuclear reactor to which the present invention is applied. A main container 1 houses a roof slab 2 for isolating the interior of the reactor from the exterior, structural support members, a plurality of intermediate heat exchangers 7, a plurality of primary main circulation pumps 8, and a core 5. The core 5 is supported by a core-supporting structural member 3. Above the core there is arranged a core superstructure 6 which comprises control rods which control the output of the reactor, the detectors which measure the temperature at the core outlet and the flow rate. A hot plenum 9 containing high-temperature sodium flowing from the core 5 is separated by a heat-shielding structural member 4 from a cold plenum 10 containing low-temperature sodium from the intermediate heat exchangers 7.

The primary sodium flowing from the core 5 first rises through an annular portion defined by the intermediate heat exchanger 7 and a primary sodium guiding cylinder 18, enters the primary sodium inlet ports 13 and then flows into a group of heat transfer tubes 19. It descends while imparting heat to secondary sodium flowing in a closed path, a portion of which is outside of the main container. The primary sodium passes through the heat transfer tubes and then flows from primary sodium output ports 14 into the cold plenum 10. The primary sodium in the cold plenum is sent to the core 5 by the primary main circulation pumps 8, is heated in the core, and then flows into the hot plenum 9 again.

On the other hand, the secondary sodium after flowing down through descending tube 15 in the intermediate heat exchanger 7 is distributed to a plurality of heat transfer tubes in a secondary-side lower plenum 16. The secondary sodium distributed to each of the heat transfer tubes rises therethrough while receiving heat from the primary sodium, flows together again in a secondary side upper plenum 17, and is then supplied to a steam generator system forming a part of the closed path through a secondary-side outlet nozzle.

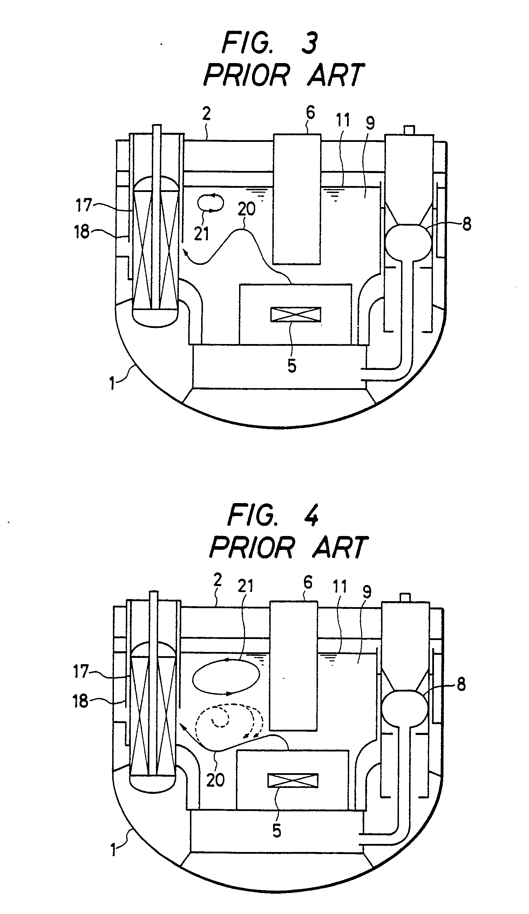

Fig. 3 shows the flow of primary sodium in the hot plenum 9 during normal operation of the reactor. More specifically, since there is a difference in temperature between the sodium flowing from the core fuel assembly and that from the blanket fuel assembly, high-temperature sub-currents 21 occur within the primary sodium in the top of the hot plenum, and thermal striping is generated at the interfaces where the sub-currents 21 mix with main currents 20 within the primary sodium.

Fig. 4 shows the flow of primary sodium in the hot plenum 9 during a transitional operation of the reactor. During this operation, as the temperature of the primary sodium drops to a low level, a so-called temperature stratification occurs such that high-temperature sodium 21 remains in the top part of the hot plenum because of its buoyancy due to its low density, and low-temperature sodium collected in the lower part thereof. Thus, thermal striping is generated at the temperature stratification interface where the high- and low-temperature sodium are in contact with each other. If this thermal striping is transmitted to the intermediate heat exchangers 7 by the main currents 20, the structural members of the intermediate heat exchangers are subjected to repeated temperature fluctuations, and this causes thermal fatigue of the structural members. During transitional operation, in particular, the region within which the primary sodium in the hot plenum 9 can mix is reduced, so that transmission of thermal striping to the intermediate heat exchangers becomes very significant. In addition, low-temperature sodium flows into the intermediate heat exchangers 7 along the main currents 20 of the primary sodium if it has not been mixed sufficiently in the hot plenum. As a result, the intermediate heat exchangers 7 are subjected to a severe cold shock from the primary sodium, and, hence, the thermal shock is imparted to the internal structural members of the intermediate heat exchangers. Further, the temperature profile within the sodium becomes non-uniform in the vertical direction from the free liquid surface 11, so that detrimental thermal stresses are applied the intermediate heat exchangers 7, the core superstructure 6, and the primary main circulating pumps 8. According to the present invention, a barrier 24 is provided to prevent any thermal striping generated in the primary sodium within the hot plenum 9 described being transmitted to the intermediate heat exchangers 7 directly by the main currents 20.

Referring now to Fig. 5 which shows one embodiment of the present invention, a barrier 24 is arranged about each of the intermediate heat exchangers 7. The barrier 24 is formed of a cylinder of a larger diameter than that of a primary sodium guiding cylinder 18, its lower end is in contact with the heat-shielding structural member 4, and its upper end is positioned slightly above the lower end of the primary sodium guiding cylinder 18.

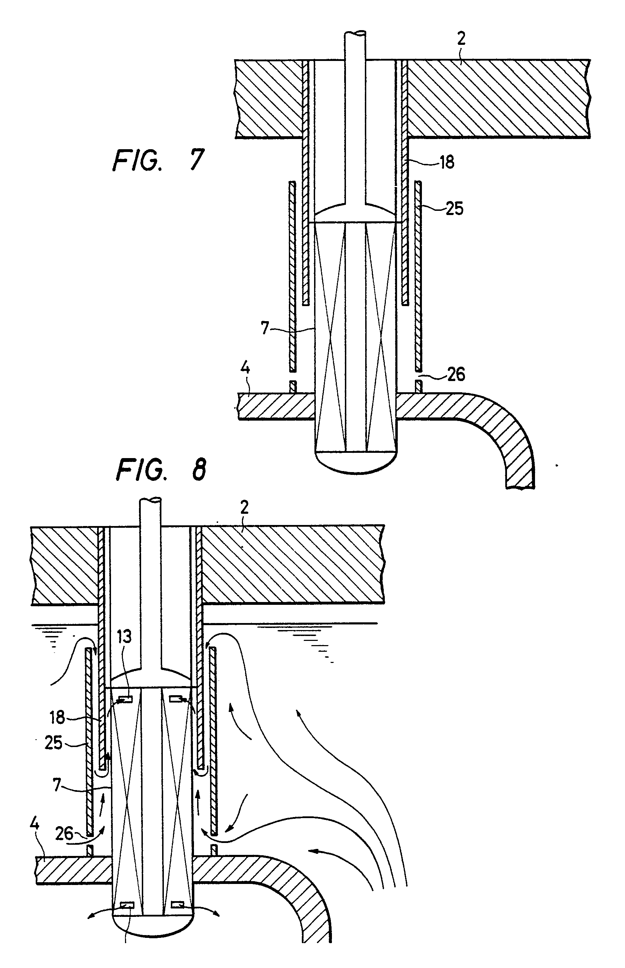

Fig. 6 shows the flow of the sodium in the hot plenum when the barrier 24 shown in Fig. 5 is provided. In Fig. 6, the amplitude of temperature oscillations within the primary sodium is 100°C (500°C — 400°C) in the region A, but that amplitude becomes about 10°C in the region B where the currents within the primary sodium mix with each other. The primary sodium passes through the annular portion around the primary guiding cylinder 18 after leaving the region B, flows into the intermediate heat exchanger 7 through the upper openings (primary sodium inlet ports) 13, and then is discharged below the heat-shielding structural member 4 through the lower openings (primary sodium outlet ports) 14.

The illustrated embodiment controls the primary sodium flow path and serves for any current of sodium with large-amplitude temperature oscillations from directly reaching the intermediate heat exchanger 7. It, thus, becomes possible to prevent any thermal striping generated within the hot plenum from being transmitted directly to the intermediate heat exchangers. Further, since the provision of the barrier 24 is intended to provide the effect that the sodium within the plenum is agitated. It is also possible to prevent a temperature stratification within the hot plenum during transitional operation of the plant, e.g., when the reactor is scrammed, which provides the effect of moderating thermal shock and thermal stress imparted to the structural members of the reactor as a result of temperature stratification. Incidentally, when the gap between the primary sodium and guiding cylinder 18 and the barrier 25 in Fig. 5 is large, the upper end of the barrier 24 should preferably be positioned slightly higher than the lower end of the primary sodium guiding cylinder 18.

Referring now to Fig. 7 which shows another embodiment of the present invention, a dam barrier 25 is formed of a cylinder of a larger diameter than that of the primary sodium guiding cylinder 18, its lower end is in contact with the heat-shielding structural member 4, and a plurality of ports 26 are formed around the periphery of its lower end.

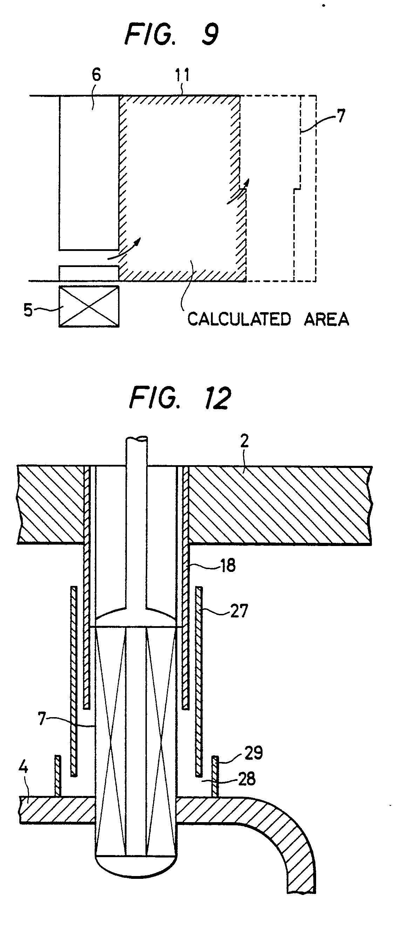

Fig. 8 shows the flow of sodium within the hot plenum when the barrier 25 is provided. As can be seen from Fig. 8, since the primary sodium flows over the upper end of the dam 25 and through the ports 26, sodium from the top of the plenum mixes with that from its bottom and then the mixed sodium passes through the annulus portion around the primary sodium guiding cylinder 18. In this embodiment, the sodium passing through the pots 26 does not flow into the interior of the barrier 25 with the same flow conditions it has within the plenum, but is first caused to flow in the same direction by the several ports 26, so that thermal striping can be prevented from being transmitted directly to the intermediate heat exchangers 7. Further, since the agitation effect of the sodium within the barrier 25 is large, it is also possible to prevent the generation of a temperature stratification within the hot plenum during the transitional operation of the plant and the even more significant effect is provided that thermal shock and thermal stress imparted to the internal structure members of the reactor as a result of that phenomenon are moderated.

The effect of the present invention will be now described with reference to the results of analysis done using the calculation model shown in Fig. 9. This calculation model was based on the assumptions that the flow paths within the hot plenum can be approximated by a tow-dimensional, axially symmetric model, and that the inlet portion of an intermediate heat exchanger is formed of an opening provided in the reactor wall. The calculation was based on a finite differential method by solving the following approximated equations of mass, momentum, and energy conservation assuming the case of a non-compressive liquid, because the sodium used as the coolant is a single-phase liquid.

Mass-conservation equation:

$$\frac{\partial u}{\partial r} + \frac{u}{r} + \frac{\partial v}{\partial z} = 0 \qquad \cdots \cdots \cdots (1)$$

Momentum-conservation equation:

$$\frac{\partial u}{\partial t} + \frac{\partial u^2}{\partial r} + \frac{u^2}{r} + \frac{\partial u v}{\partial z}$$

$$= -\frac{1}{\rho}\frac{\partial p}{\partial r} + \varepsilon_M \{ \frac{\partial^2 u}{\partial r^2} + \frac{\partial^2 u}{\partial z^2} + (\frac{1}{r}\frac{\partial u}{\partial r} - \frac{u}{r^2}) \} \qquad \cdots \cdots \cdots (2)$$

$$\frac{\partial v}{\partial t} + \frac{\partial u^2}{\partial r} + \frac{\partial v^2}{\partial z} + \frac{u v}{r}$$

$$= -\frac{1}{\rho}\frac{\partial p}{\partial z} + \varepsilon_M \{ \frac{\partial^2 v}{\partial r^2} + \frac{\partial^2 v}{\partial z^2} + \frac{1}{r}\frac{\partial v}{\partial r} \} + \frac{\rho - \rho^0}{\rho} g \qquad \cdots \cdots \cdots (3)$$

Energy-conservation equation:

$$\frac{\partial T}{\partial t}+\frac{\partial\, uT}{\partial r}+\frac{uT}{r}+\frac{\partial\, vT}{\partial z}$$

$$= \quad \varepsilon_H\left(\frac{\partial^2 T}{\partial r^2}+\frac{\partial^2 T}{\partial z^2}+\frac{1}{r}\frac{\partial T}{\partial r}\right) \qquad \cdots\cdots\cdots(4)$$

where  g:  acceleration due to gravity
       r:  radial coordinate
       t:  time
       v:  flow rate in the z direction
       $\varepsilon_H$:  eddy thermal diffusivity
       $\rho$:  density
       p:  pressure
       T:  temperature
       u:  flow rate in the r direction
       z:  vertical coordinate
       $\varepsilon_M$:  coefficient of eddy viscosity
symbol O:  reference value

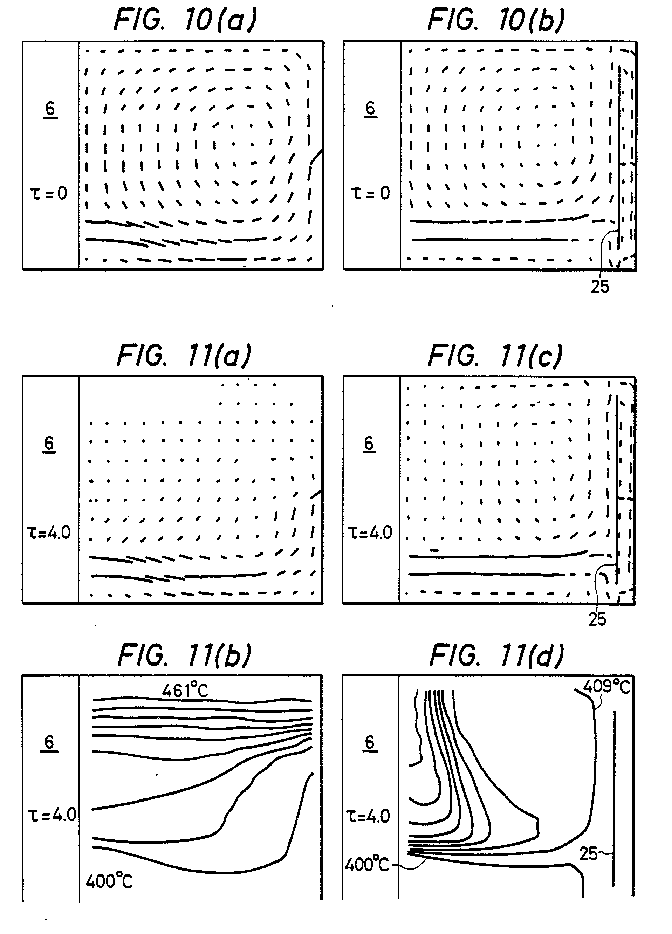

Fig. 10 shows the results of calculations when flow rate vectors representing normal operation were applied to calculation models of the prior-art structure (without barrier), and that of the present invention (the embodiment of Fig. 7). With that of the present invention (Fig. 10(b)), although no significant difference can be seen in the main flow conditions within the plenum, the sodium can be seen to flow into the intermediate heat exchanger from the upper and lower ends of the cylinder (barrier 25), preventing the transmission of thermal striping. Therefore, sodium from the top and bottom of the plenum is mixed before it enters the intermediate heat exchanger, and this makes it possible to prevent thermal striping generated in the plenum being transmitted directly to the intermediate heat exchanger.

Figs. 11(a) and 11(b) show the results of calculations on the flow rate vectors and temperature profile within the hot plenum during a scram of a reactor with the prior-art structure (without barrier), respectively. Figs. 11(c) and 11(d) show the results of calculations on the flow rate vectors and temperature profile within the hot plenum during a scram of a reactor with the present invention (Fig. 7), respectively. The calculations were done for the case where $\tau$ = 4.0 ($\tau$ = t/t*: t . . . time, t* . . . plenum passage time) after the start of the scram, and the flow before the start of the scram is the same as that of the normal state shown in Fig. 8.

In the prior art structure, it can be seen that temperature stratification occurs, a temperature difference of 61°C is generated between the top and bottom of the plenum, and sodium stays in the top of the plenum. On the other hand, with the present invention, the flow when $\tau$ = 4.0 is not very different from that when $\tau$ = 0, and it is apparent that not only is the direct transmission of the thermal striping generated in the plenum to the intermediate heat exchanger prevented satisfactorily, but also the occurrence of temperature stratification. As a consequence, it is also possible to prevent the occurrence of thermal shock and thermal stress on the equipment and apparatus due to temperature stratification.

Another embodiment of the present invention is illustrated in Fig. 12. As shown, a barrier 27 whose lower end is separated from the heat-shielding structural member 4 by a gap 28 and whose upper end is higher than the lower end of the guide member 18 is provided. Further, another cylindrical member or barrier 29 of a larger diameter than that of the barrier 27 is arranged to surround it in such a manner that the lower end of the cylindrical member is in contact with the heat-shielding structural member 4, and its upper end is positioned above the lower end of the barrier 27. In this case, it is also possible to prevent a thermal striping from being transmitted directly to the intermediate heat exchangers.

While we have shown and described several embodiments in accordance with the present invention, it is understood that the same is not limited thereto but is susceptible of numerous changes and modifications as known to those skilled in the art and we therefore do not wish to be limited to the details shown and described herein but intend to cover all such changes and modifications as are encompassed by the scope of the appended claims.

**Claims**

1. A tank-type integrated fast breeder nuclear reactor having intermediate heat exchangers (7) within a nuclear reactor container (1) and utilizing sodium as a coolant for the reactor core and having a heat-shielding structural member (4) for separating a hot plenum and a cold plenum of the nuclear reactor container and wherein a coolant-guilding cylinder (18) surrounds partially each intermediate heat exchanger (7), characterized by at least a first barrier member (24; 25; 29) being associated with each intermediate heat exchanger (7), and arranged on the outer side of said coolant guiding cylinder (18), the first barrier member (24; 25; 29) having an upper end positioned below the free liquid surface of the coolant

# 0 114 052

within the nuclear reactor container and a lower end in contact with the heat-shielding structural member (4) so as to control the flow of coolant from the hot plenum (9) from directly contacting the associated intermediate heat exchanger (7) (Fig. 5).

2. A fast breeder nuclear reactor according to claim 1, wherein the first barrier member (24; 25; 29) is a cylindrical member extending from the heat-shielding structural member (4) (Fig. 5, 6).

3. A fast breeder nuclear reactor according to claim 1, wherein the upper end of the first barrier member (24; 25) is positioned above a lower end of the coolant-guiding cylinder (18) (Fig. 7, 8).

4. A fast breeder nuclear reactor according to claim 1, 2 or 3 wherein the first barrier member (25) is provided with a plurality of coolant inlet ports (26) around the periphery at the lower end thereof (Fig. 7, 8).

5. A fast breeder nuclear reactor according to claim 1 or 2, further comprising a second barrier member (27) surrounding an associated intermediate heat exchanger (7) on the inner side of the first barrier member (29), the second barrier member having a lower end thereof spaced from the heat-shielding structural member (4) (Fig. 12).

6. A fast breeder nuclear reactor according to claim 5, wherein the second barrier member (27) is a cylindrical member, the lower end thereof being positioned lower than the upper end of the first barrier member (29) (Fig. 12).

7. A tank-type fast breeder according to claim 6, wherein the second barrier member (27) is provided with a plurality of coolant inlet ports (28) around the periphery of the lower end thereof.

## Patentansprüche

1. Integrierter schneller Brutreaktor vom Tank-Typ, aufweisend Zwischenwärmeaustauscher (7) in einem Reaktorbehälter (1) und bei dem Natrium also Kühlmittel für den Reaktorkern verwendet wird und aufweisend ein wärmeabschirmendes Bauelement (4) zum Trennen eines heißen Plenums und eines kalten Plenums des Reaktorbehälters und bei dem ein Kühlmittel führender Zylinder (18) jeden Zwischenwärmeaustauscher (7) teilweise umgibt, gekennzeichnet durch wenigstens ein erstes Barriereelement (24; 25; 29), das jedem Zwischenwärmeaustauscher (7) zugeordnet ist und auf der Außenseite des Kühlmittel führenden Zylinders (18) angeordnet ist, wobei das erste Barrierelement (24; 25; 29) ein unterhalb der freien Flüssigkeitsoberfläche des Kühlmittels im Reaktorbehälter positioniertes oberes Ende und ein unteres Ende in Kontakt mit dem wärmeabschirmenden Bauelement (4) aufweist, um die Kühlmittelströmung aus dem heißen Plenum (9) fortzuleiten von einer direkten Kontaktierung des zugeordneten Zwischenwärmeaustauschers (7) (Fig. 5).

2. Schneller Brutreaktor nach Anspruch 1, bei dem das erste Barriereelement (24; 25; 29) ein zylindrisches Element ist, das sich von dem wärmeabschirmenden Bauelement (4) fort erstreckt (Fig. 5, 6).

3. Schneller Brutreaktor nach Anspruch 1, bei dem das obere Ende des ersten Barriereelementes (24; 25) oberhalb eines unteren Endes des Kühlmittel führenden Zylinders (18) positioniert ist (Fig. 7, 8).

4. Schneller Brutreaktor nach Anspruch 1, 2 oder 3, bei dem das erste Barriereelement (25) mit einer Anzahl von Kühlmitteleinlaßoffnungen (26) um die Peripherie an seinem unteren Ende versehen ist (Fig. 7, 8).

5. Schneller Brutreaktor nach Anspruch 1 oder 2, weiter umfassend ein zweites Barriereelement (27), das einen zugeordneten Zwischenwärmeaustauscher (7) auf der Innenseite des ersten Barriereelementes (29) umgibt, wobei das untere Ende des zweiten Barriereelementes mit Abstand von dem wärmeabschirmenden Bauelement (4) angeordnet ist (Fig. 12).

6. Schneller Brutreaktor nach Anspruch 5, bei dem das zweite Barriereelement (27) ein zylindrisches Element ist, dessen unteres Ende tiefer also das obere Ende des ersten Barriereelementes (29) positioniert ist (Fig. 12).

7. Schneller Brüter vom Tank-Typ nach Anspruch 6, bei dem das zweite Barriereelement (27) mit einer Anzahl von Kühlmitteleinlaßoffnungen (28) um die Peripherie seines unteren Endes versehen ist.

## Revendications

1. Réacteur nucléaire surrégénérateur rapide intégré du type à cuve comportant des échangeurs de chaleur intermédiaires (7) situés dans une enceinte (1) du réacteur nucléaire et utilisant du sodium comme réfrigérant pour la coeur du réacteur et comportant un élément structurel de protection thermique servant à séparer un collecteur chaud et un collecteur froid de l'enceinte du réacteur nucléaire, et dans lequel un cylindre (18) de guidage du réfrigérant entoure partiellement chaque échangeur de chaleur intermédiaire (7), caractérisé par au moins un premier élément formant barrière (24; 25; 29) associé à chaque échangeur de chaleur intermédiaire (7) et disposé sur la face extérieure dudit cylindre (18) de guidage du réfrigérant, le premier élément formant barrière (24; 25; 29) possédant une extrémité supérieure disposée audessous de la surface libre du liquide de réfrigérant à l'intérieure de l'enceinte du réacteur nucléaire et une extrémité inférieure placée en contact avec l'élément structurel de protection thermique (4) de manière à empêcher que l'écoulement de réfrigérant provenant du collecteur chaud (9) ne vienne en contact direct avec l'échangeur de chaleur intermédiaire associé (7) (Figure. 5).

2. Réacteur nucléaire surrégénérateur rapide salon la revendication 1, dans lequel le premier élément formant barrière (24; 25; 29) est un élément cylindrique s'étendant à partir de l'élément structurel de protection thermique (4) (Figures. 5, 6).

3. Réacteur nucléaire surrégénérateur rapide selon la revendication 1, dans lequel l'extrémité supérieure du premier élément formant barrière (24; 25) est située au-dessus d'une extrémité inférieure du cylindre (18) guidant le réfrigérant (Figures. 7, 8).

4. Réacteur nucléaire surrégénérateur rapide selon la revendication 1, 2 ou 3, dans lequel le premier élément formant barrière (25) comporte une pluralité d'orifices (26) d'entrée du réfrigérant situés sur le pourtour au niveau de l'extrémité inférieure de cet élément (Figures. 7, 8).

5. Réacteur nucléaire surrégénérateur rapide selon la revendication 1 ou 2, comportant en outre un second élément formant barrière (27) entourant un échangeur de chaleur intermédiaire associé (7), sur la face intérieure du premier élément formant barrière (29), le second élément formant barrière possédant une extrémité inférieure espacée de l'élément structurel de protection thermique (4) (Figure. 12).

6. Réacteur nucléaire surrégénérateur rapide selon la revendication 5, dans lequel le second élément formant barrière (27) est un organe cylindrique, dont l'extrémité inférieure est placée plus bas que l'extrémité supérieure du premier élément formant barrière (29) (Figure. 12).

7. Réacteur surrégénérateur rapide du type à cuve selon la revendication 6, dans lequel le second élément formant barrière (27) comporte une pluralité d'orifices (28) d'entrée du réfrigérant sur la périphére de son extrémité inférieure.

## FIG. 1
## PRIOR ART

## FIG. 2
## PRIOR ART

# FIG. 3
## PRIOR ART

# FIG. 4
## PRIOR ART

FIG. 5

FIG. 6

FIG. 7

FIG. 8

4

*FIG. 9*

CALCULATED AREA

*FIG. 12*

## FIG. 10(a)

6

τ = 0

## FIG. 10(b)

6

τ = 0

25

## FIG. 11(a)

6

τ=4.0

## FIG. 11(c)

6

τ=4.0

25

## FIG. 11(b)

6

τ=4.0

461°C

400°C

## FIG. 11(d)

6

τ=4.0

409°C

400°C

25